(19) Europäisches Patentamt
European Patent Office
Office européen des brevets

(11) EP 1 517 609 B1

# (12) EUROPÄISCHE PATENTSCHRIFT

(45) Veröffentlichungstag und Bekanntmachung des Hinweises auf die Patenterteilung:
**16.01.2008 Patentblatt 2008/03**

(21) Anmeldenummer: **03760603.5**

(22) Anmeldetag: **11.06.2003**

(51) Int Cl.:
***A01N 43/653*** *(2006.01)*

(86) Internationale Anmeldenummer:
**PCT/EP2003/006107**

(87) Internationale Veröffentlichungsnummer:
**WO 2004/000020 (31.12.2003 Gazette 2004/01)**

## (54) FUNGIZIDE WIRKSTOFFKOMBINATIONEN

FUNGICIDAL COMBINATIONS OF ACTIVE SUBSTANCES

COMBINAISONS DE SUBSTANCES ACTIVES FONGICIDES

(84) Benannte Vertragsstaaten:
**AT BE BG CH CY CZ DE DK EE ES FI FR GB GR HU IE IT LI LU MC NL PT RO SE SI SK TR**

(30) Priorität: **24.06.2002 DE 10228103**

(43) Veröffentlichungstag der Anmeldung:
**30.03.2005 Patentblatt 2005/13**

(73) Patentinhaber: **Bayer CropScience Aktiengesellschaft**
**40789 Monheim (DE)**

(72) Erfinder:
- **WACHENDORFF-NEUMANN, Ulrike**
  **56566 Neuwied (DE)**
- **MAULER-MACHNIK, Astrid**
  **42799 Leichlingen (DE)**
- **JAUTELAT, Manfred**
  **51399 Burscheid (DE)**
- **HOLMWOOD, Graham**
  **51371 Leverkusen (DE)**

(56) Entgegenhaltungen:
**WO-A-97/00012** **WO-A-98/47367**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine neue Wirkstoffkombination, die aus dem bekannten 2-[α{(([(α-Methyl-3-trifluoromethyl-benzyl)imino]oxy}-o-tolyl]-glyoxylsäure-methylester-O-methyloxim einerseits und weitern bekannten Wirkstoffen andererseits besteht und sehr gut zur Bekämpfung von phytopathogenen Pilzen geeignet ist.

Es ist bereits bekannt, dass 2-α-{[(α-Methyl-3-trifluoromethyl-benzyl)imino]oxy}-o-tolyl]-glyoxiylsäure-methylester-O-methyloxim fungizide Eigenschaften besitzt (vgl. EP-A-460 575). Die Wirksamkeit dieses Stoffes ist gut, lässt aber bei niedrigen Aufwandmengen in manchen Fällen zu wünschen übrig.

Ferner ist schon bekannt, dass zahlreiche Azol-Derivate zur Bekämpfung von Pilzen eingesetzt werden können (vgl. Pesticide Manual, 11th. Edition (1997), Seite 1144; WO 96/16048). Auch die Wirkung dieser Stoffe ist aber bei niedrigen Aufwandmengen nicht immer ausreichend.

Es wurde nun gefunden, dass die neue Wirkstoffkombination aus

2-[α-{[(α-Methyl-3-trifluoromethyl-benzyl)imino]oxy}-o-tolyl]-glyoxylsäuremethylester-O-methyloxim der Formel (I)

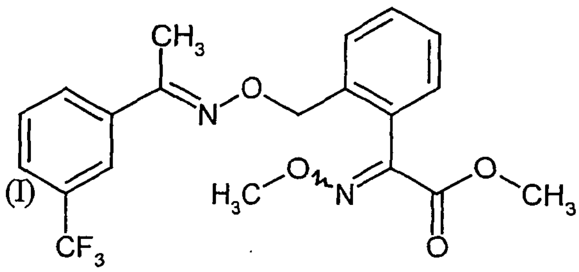

(I)

(Trifloxystrobin)

und

(1) der Verbindung der Formel (II)

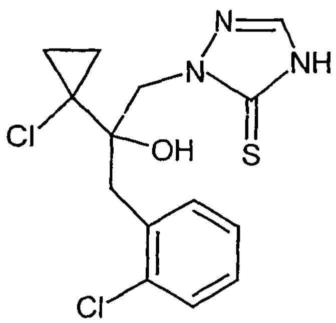

(II)

(Prothioconazole)

und

(2) der Verbindung der Formel (III)

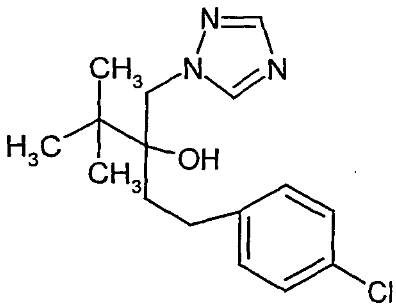

(III)

(Tebuconazole)

sehr gute fungizide Eigenschaften besitzt.

Überraschenderweise ist die fungizide Wirkung der erfindungsgemäßen Wirkstoffkombination aus den drei Wirkstoffen wesentlich höher als die Summe der Wirkungen der einzelnen Wirkstoffe bzw. die Wirkung der vorbekannten Mischungen aus jeweils zwei Wirkstoffen. Es liegt also ein nicht vorhersehbarer, echter synergistischer Effekt vor und nicht nur eine Wirkungsergänzung.

Die in der erfindungsgemäßen Wirkstoffkombination neben dem Wirkstoff der Formel (I) vorhandenen Komponenten sind ebenfalls bekannt. Im Einzelnen werden die Wirkstoffe in den folgenden Publikationen beschrieben:

Verbindung der Formel (I): EP-A-460 575

Verbindung der Formel (II): WO 96/16048

Verbindung der Formel (III): EP-A-040 345

Folgende Wirkstoffkombinationen sind ebenfalls bekannt:

Wirkstoffkombination enthaltend Verbindungen der Formel (I) und (III): WO 97/00012

Wirkstoffkombination enthaltend Verbindungen der Formel (II) und (III): WO 98/47367

Wenn die Wirkstoffe in der erfindungsgemäßen Wirkstoffkombination in bestimmten Gewichtsverhältnissen vorhanden sind, zeigt sich der synergistische Effekt besonders deutlich. Jedoch können die Gewichtsverhältnisse der Wirkstoffe in der Wirkstoffkombination in einem relativ großen Bereich variiert werden.

Im Allgemeinen entfallen auf 1 Gewichtsteil an Wirkstoff der Formel (I)
0,1 -10 Gewichtsteile, vorzugsweise 0,2 - 5 Gewichtsteile an Wirkstoff der Formel (II), und
0,1 - 10 Gewichtsteile, vorzugsweise 0,2 - 5 Gewichtsteile an Wirkstoff der Formel (III).

Die erfindungsgemäße Wirkstoffkombination besitzt sehr gute fungizide Eigenschaften und lässt sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäße Wirkstoffkombination eignet sich besonders gut zur Bekämpfung von Getreidekrankheiten, wie Erysiphe, Cochliobolus, Pyrenophora, Rhynchosporium, Septoria, Fusarium, Pseudocercosporella und Leptosphaeria und zur Bekämpfung von Pilzbefall an Nichtgetreidekulturen wie Wein, Obst, Erdnuss, Gemüse, beispielsweise Phythophthora, Plasmopara, Pythium sowie Echte Mehltaupilze wie zum Beispiel Sphaerotheca oder Uncinula und Blattfleckenerreger wie Venturia, Alternaria und Septoria sowie Rhizoctonia, Botrytis, Sclerotinia und Sclerotium.

Die gute Pflanzenverträglichkeit der Wirkstoffkombination in den zur Bekämpfung von Pflanzenkrankheiten notwendigen Konzentrationen erlaubt eine Behandlung von oberirdischen Pflanzenteilen, von Pflanz- und Saatgut, und des Bodens. Die erfindungsgemäße Wirkstoffkombination kann zur Blattapplikation oder auch als Beizmittel eingesetzt werden.

Die erfindungsgemäße Wirkstoffkombination eignet sich auch zur Steigerung des Ernteertrages. Sie ist außerdem mindertoxisch und weist eine gute Pflanzenverträglichkeit auf.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Die erfindungsgemäße Wirkstoffkombination kann in die üblichen Formulierungen überführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Butan, Propan, Stickstoff und Kohlendioxid. Als feste Trägerstoffe kommen infrage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstängel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im Allgemeinen zwischen 0,1 und 95 Gew.-% Wirkstoffe, vorzugsweise zwischen 0,5 und 90 %.

Die erfindungsgemäße Wirkstoffkombination kann als solche oder in ihren Formulierungen auch in Mischung mit bekannten Fungiziden, Bakteriziden, Akariziden, Nematiziden oder Insektiziden verwendet werden, um so z.B. das Wirkungsspektrum zu verbreitern oder Resistenzentwicklungen vorzubeugen.

Auch eine Mischung mit anderen bekannten Wirkstoffen, wie Herbiziden oder mit Düngemitteln und Wachstumsregulatoren ist möglich.

Die Wirkstoffkombination kann als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden. Die Anwendung geschieht in üblicher Weise, z.B. durch Gießen, Verspritzen, Versprühen, Verstreuen, Verstreichen, Trockenbeizen, Feuchtbeizen, Nassbeizen, Schlämmbeizen oder Inkrustieren.

Beim Einsatz der erfindungsgemäßen Wirkstoffkombination können die Aufwandmengen je nach Applikationsart innerhalb eines größeren Bereichs variiert werden. Bei der Behandlung von Pflanzenteilen liegen die Aufwandmengen an Wirkstoffkombination im Allgemeinen zwischen 0,1 und 10 000 g/ha, vorzugsweise zwischen 10 und 1 000 g/ha. Bei der Saatgutbehandlung liegen die Aufwandmengen an Wirkstoffkombination im Allgemeinen zwischen 0,001 und 50 g pro Kilogramm Saatgut, vorzugsweise zwischen 0,01 und 10 g pro Kilogramm Saatgut. Bei der Behandlung des Bodens

liegen die Aufwandmengen an Wirkstoffkombination im Allgemeinen zwischen 0,1 und 10 000 g/ha, vorzugsweise zwischen 1 und 5 000 g/ha.

Die gute fungizide Wirkung der erfindungsgemäßen Wirkstoffkombination geht aus den nachfolgenden Beispielen hervor. Während die einzelnen Wirkstoffe in der fungiziden Wirkung Schwächen aufweisen, zeigen die Kombinationen aus drei Wirkstoffen eine Wirkung, die über eine einfache Wirkungssummierung hinausgeht.

Ein synergistischer Effekt liegt bei Fungiziden immer dann vor, wenn die fungizide Wirkung der Wirkstoffkombination größer ist als die Summe der Wirkungen der einzeln applizierten Wirkstoffe.

Die zu erwartende Wirkung für eine gegebene Kombination von 2 oder 3 Wirkstoffen kann nach S.R. Colby ("Calculating Synergistic and Antagonistic Responses of Herbicide Combinations", Weeds 1967, 15, 20-22) wie folgt berechnet werden:

Wenn

X den Wirkungsgrad beim Einsatz des Wirkstoffes A in einer Aufwandmenge von m g/ha bedeutet,

Y den Wirkungsgrad beim Einsatz des Wirkstoffes B in einer Aufwandmenge von n g/ha bedeutet,

Z den Wirkungsgrad beim Einsatz des Wirkstoffes C in einer Aufwandmenge von rg/ha bedeutet,

$E_1$ den Wirkungsgrad beim Einsatz der Wirkstoffe A und B in Aufwandmengen von m und n g/ha bedeutet und

$E_2$ den Wirkungsgrad beim Einsatz der Wirkstoffe A und B und C in Aufwandmengen von m und n und r g/ha bedeutet,

dann ist

$$E_1 = X + Y - \frac{X \cdot Y}{100}$$

und für eine Kombination aus 3 Wirkstoffen:

$$E_2 = X + Y + Z - \frac{X \cdot Y - X \cdot Z - Y \cdot Z}{100} + \frac{X \cdot Y \cdot Z}{10000}$$

Dabei wird der Wirkungsgrad in % ermittelt. Es bedeutet 0 % ein Wirkungsgrad, der demjenigen der Kontrolle entspricht, während ein Wirkungsgrad von 100 % bedeutet, dass kein Befall beobachtet wird.

Ist die tatsächliche fungizide Wirkung größer als berechnet, so ist die Kombination in ihrer Wirkung überadditiv, d.h. es liegt ein synergistischer Effekt vor. In diesem Fall muss der tatsächlich beobachtete Wirkungsgrad größer sein als der aus der oben angeführten Formel errechnete Wert für die erwarteten Wirkungsgrade $E_1$ bzw. $E_2$.

Die Erfindung wird durch das folgende Beispiel veranschaulicht.

## Beispiel A

Pyrenophora teres-Test (Gerste) / kurativ

| | |
|---|---|
| Lösungsmittel: | 25 Gewichtsteile N,N-Dimethylacetamid |
| Emulgator: | 0,6 Gewichtsteile Alkylarylpolyglykolether |

Zur Herstellung einer zweckmäßigen Wirkstoffzubereitung vermischt man 1 Gewichtsteil Wirkstoffkombination mit den angegebenen Mengen Lösungsmittel und Emulgator und verdünnt das Konzentrat mit Wasser auf die gewünschte Konzentration.

Zur Prüfung auf kurative Wirksamkeit werden junge Pflanzen mit einer KonidienSuspension von Pyrenophora teres besprüht. Die Pflanzen verbleiben 48 Stunden bei 20°C und 100 % relativer Luftfeuchtigkeit in einer Inkubationskabine. Anschließend werden die Pflanzen mit der Wirkstoffzubereitung in der angegebenen Aufwandmenge besprüht.

Die Pflanzen werden in einem Gewächshaus bei einer Temperatur von ca. 20°C und relativen Luftfeuchtigkeit von ca. 80 % aufgestellt.

7 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

**Tabelle A**

| Pyrenophora teres-Test (Gerste) / kurativ | | |
|---|---|---|
| **Wirkstoff** | **Aufwandmenge an Wirkstoff in g/ha** | **Wirkungsgrad in %** |
| Bekannt:<br>Bsp.(I) | 100 | 67 |
| Bsp.(II) | 100 | 56 |
| Bsp.(III) | 100 | 22 |
| Erfindungsgemäße Mischung:<br>Bsp. (I) + Bsp. (II) + Bsp. (III)<br>(10:8,5:10) | 35 + 30 + 35 | 78 |

## Patentansprüche

**1.** Wirkstoffkombination, enthaltend eine Verbindung der Formel (I)

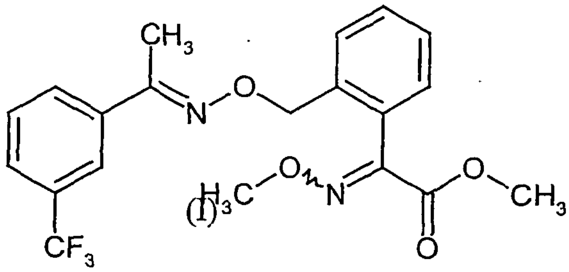

(I)

und

(1) eine Verbindung der Formel (II)

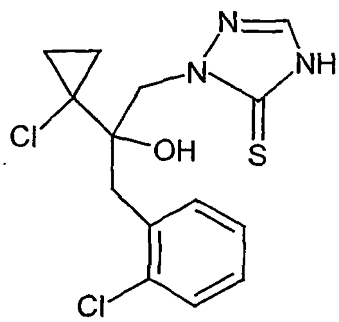

(II)

(Prothioconazole)

und

(2) eine Verbindung der Formel (III)

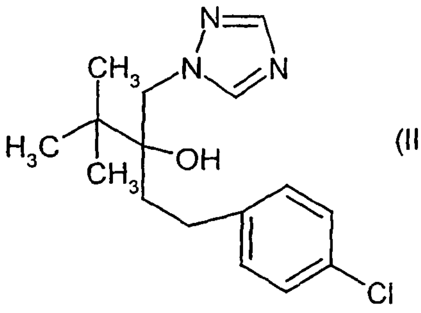

(III)

(Tebuconazole)

2. Mittel gemäß Anspruch 1, **dadurch gekennzeichnet, dass** in der Wirkstoffkombination das Gewichtsverhältnis von Wirkstoff der Formel (I)
zu Wirkstoff der Formel (II) 1:0,1 bis 1:10 beträgt und
zu Wirkstoff der Formal (III) 1:0,1 bis 1:10 beträgt.

3. Verfahren zur Bekämpfung von Pilzen, **dadurch gekennzeichnet, dass** man eine Wirkstoffkombination gemäß Anspruch 1 auf die Pilze und/oder deren Lebensraum ausbringt.

4. Verwendung der Wirkstoffkombination gemäß Anspruch 1 zur Bekämpfung von Pilzen.

5. Verfahren zur Herstellung von fungiziden Mitteln, **dadurch gekennzeichnet, dass** man eine Wirkstoffkombination gemäß Anspruch 1 mit Streckmitteln und/oder oberflächenaktiven Stoffen vermischt.

## Claims

1. Active compound combination, comprising a compound of the formula (I)

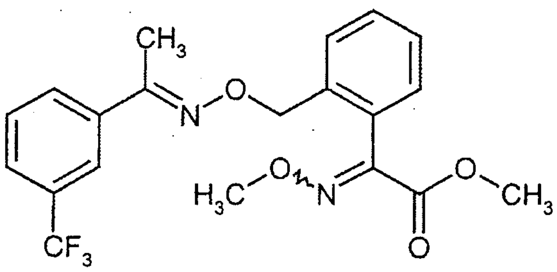

(I)

and

(1) a compound of the formula (II)

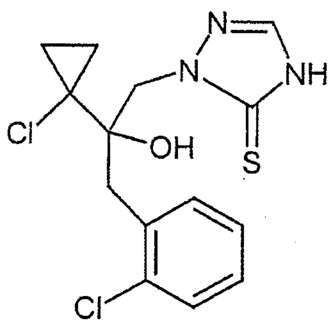

(II)

(prothioconazole)

and
(2) a compound of the formula (III)

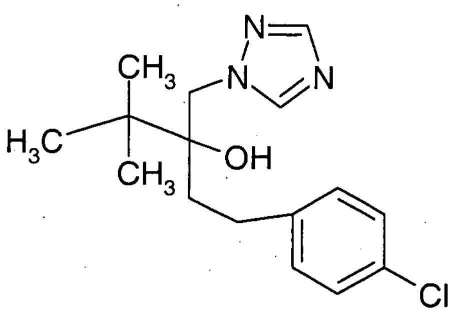

(III)

(tebuconazole).

2. Composition according to Claim 1, **characterized in that** in the active compound combination the weight ratio of active compound of the formula (I)
to active compound of the formula (II) is from 1:0.1 to 1:10 and
to active compound of the formula (III) is from 1:0.1 to 1:10.

3. Method for controlling fungi, **characterized in that** an active compound combination according to Claim 1 is applied to the fungi and/or their habitat.

4. Use of the active compound combination according to Claim 1 for controlling fungi.

5. Process for preparing fungicidal compositions, **characterized in that** an active compound combination according to Claim 1 is mixed with extenders and/or surfactants.

## Revendications

1. Combinaison de substances actives, contenant un composé de la formule (I)

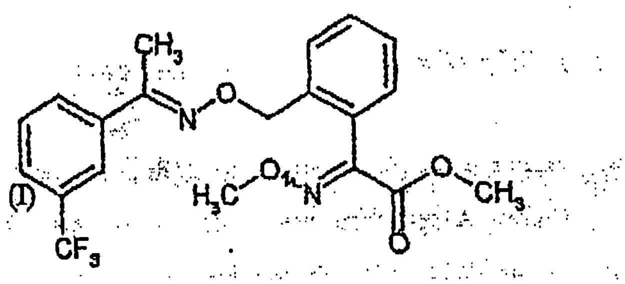

(I)

et

(1) un composé de la formule (II)

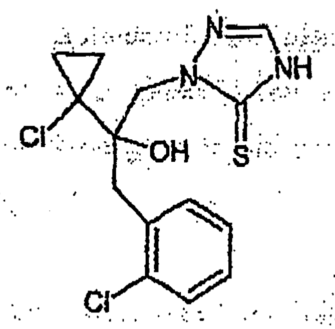

(II)

(prothioconazole)

et

(2) un composé de la formule (III)

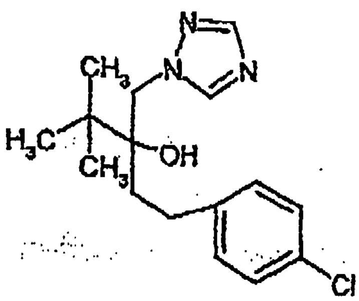

(III)

(tébuconazole)

**2.** Agent selon la revendication 1, **caractérisé en ce que** dans la combinaison de substances actives, le rapport pondéral entre la substance active de la formule (I)
et la substance active de la formule (II) est compris entre 1:0,1 et 1:10
et la substance active de la formule (III) est compris entre 1:0,1 et 1:10.

**3.** Procédé destiné à combattre les champignons, **caractérisé en ce que** l'on fait agir une combinaison de substances actives selon la revendication 1 sur les champignons et/ou sur leur espace vital.

**4.** Utilisation de la combinaison de substances actives selon la revendication 1 pour combattre les champignons.

**5.** Procédé de production de fongicides, **caractérisé en ce que** l'on mélange une combinaison de substances actives

selon la revendication 1 avec des diluants et/ou des substances tensioactives.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 460575 A
- WO 9616048 A
- EP 040345 A
- WO 9700012 A
- WO 9847367 A


### In der Beschreibung aufgeführte Nicht-Patentliteratur


- **S.R. COLBY.** Calculating Synergistic and Antagonistic Responses of Herbicide Combinations. *Weeds,* 1967, vol. 15, 20-22